Europäisches Patentamt

European Patent Office

Office européen des brevets

(19)

(11) **EP 1 383 079 A2**

(12) **EUROPEAN PATENT APPLICATION**

(43) Date of publication:
**21.01.2004 Bulletin 2004/04**

(51) Int Cl.⁷: **G06N 3/08**

(21) Application number: **03101825.2**

(22) Date of filing: **20.06.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(30) Priority: **09.07.2002 US 190810**<br><br>(71) Applicant: **Koninklijke Philips Electronics N.V.**<br>**5621 BA Eindhoven (NL)**<br><br>(72) Inventors:<br>• **Agnihotri, Lalitha**<br>  **5656 AA, Eindhoven (NL)** | • **Jeannin, Sylvie**<br>  **5656 AA, Eindhoven (NL)**<br>• **Schaffer, James, D.**<br>  **5656 AA, Eindhoven (NL)**<br>• **Dimitrova, Nevenka**<br>  **5656 AA, Eindhoven (NL)**<br>• **McGee, Thomas, F., M.**<br>  **5656 AA, Eindhoven (NL)**<br><br>(74) Representative:<br>**Verdonk, Peter Lambert Frans Maria et al**<br>**Philips**<br>**Intellectual Property & Standards**<br>**P.O. Box 220**<br>**5600 AE Eindhoven (NL)** |

(54) **Method, apparatus, and program for evolving neural network architectures to detect content in media information**

(57)     A method for operating a neural network (300), and a program and apparatus (2; 4) that operate in accordance with the method. The method comprises the steps of applying data indicative of predetermined content, derived from an electronic signal including a representation of the predetermined content, to an input of at least one neural network (300), to cause the at least one network (300) to generate at least one output indicative of either a detection or a non-detection of the predetermined content. Each neural network (300) has an architecture specified by at least one corresponding parameter. The method also comprises a step of evolving the at least one parameter to modify the architecture of the at least one neural network (300), based on the at least one output, to increase an accuracy at which that at least one neural network (300) detects the predetermined content indicated by the data.

FIG. 5

**EP 1 383 079 A2**

**Description**

This invention relates generally to the detection of commercials or other predetermined content in video information, using a neural network having an architecture optimized by a search algorithm, and in particular to a method, apparatus, and program for evolving parameters defining a neural network architecture to enable the neural network to accurately detect transitions from one type of content to another type of content.

Personal video receivers/recorders and devices that modify and/or record the content of broadcast video are becoming increasingly popular. One example is a personal video recorder that records programs on a hard disk based on preferences of a user. One of the features under investigation for such systems is content detection. For example, a system that can detect commercials may allow substitute advertisements to be inserted in a video stream ("commercial swapping") or the temporary halting of the video at the end of a commercial to prevent a user, who was distracted during a commercial, from missing any of the main program content. Content detection also may enable users who are not interested in the content of commercials or promotions interposed within a recorded television program, to skip through those commercials either manually or by using a device designed to perform skipping autonomically (see, e. g., U.S. Pat. No. 5,151,788).

There are many known methods for detecting commercials. One method is the detection of a high cut rate or sudden change in a scene with no fade or movement transition between temporally-adjacent frames. Cuts can include fades so the cuts do not have to be hard cuts. A more robust criterion may be high transition rates. Another indicator is the presence of a black frame (or unicolor/monochrome frame) coupled with silence, which may indicate the beginning of a commercial break. One or more black frames are usually found immediately before and after an individual commercial segment. Another known indicator of commercials is high "activity", which is the rate of change in the luminance level between two different sets of frames. In commercials, objects and scenes generally move faster and change more frequently than during non-commercial video segments, and thus commercials typically are filled with "activity". When a low amount of activity is detected, the commercial is deemed to have ended, and a resumption in recording may follow.

Another known technique employs a neural network to detect objects in video images. A neural network is a computational model composed of connected neurons (also referred to as nodes). Each connection has a strength measured by a weight value which can be modified by training the network to enable it to optimally estimate some predetermined quantity. A neuron is activated based on activations of preceding nodes connected to that neuron and the weights on those connections. U.S. Pat. No. 6,324,532 B1 by Spence et al. refers to a method and apparatus for learning and integrating features from multiple resolutions for detecting and/or classifying objects. The apparatus comprises a hierarchical pyramid of neural networks (HPNN), wherein the HPNN has either a "fine-to-coarse" structure, or an architecture that is a combination of the "fine-to-coarse" structure and a "coarse-to-fine" structure. An objective function and various associated regularizer embodiments train the neural networks to detect sub-patterns of features of some class of objects.

While at least some of the techniques referred to above may show promising results and may be well-suited for their intended purposes, their reliability and accuracy in detecting content such as commercials can be wanting in at least some cases. One important factor that can contribute to this problem is the use of inappropriate or non-optimum parameters, such as algorithm thresholds or weight values, in those techniques. Since it can be difficult to pre-select the most appropriate parameter values for use in content detection techniques, especially when the parameter selection is performed manually, and, in the case of neural networks, training alone may not always yield the most optimum weight values and neural network architectures, there is no assurance that highly accurate results will be obtained. Also, even in cases where optimum values or architectures are initially selected, commercial producers can later change various commercial features to render those initial values and architectures obsolete, and thereby prevent the techniques from successfully detecting commercial content.

There is a need, therefore, to provide a technique which overcomes these problems by learning features of provided electronic media (e.g., audio, video, or combination audio/video) information which enable predetermined content included in the information to be detected accurately and reliably.

It is an object of this invention to provide a method, apparatus, and program for learning features of provided electronic media information to enable predetermined content included in the information to be detected accurately and reliably, based on the presence of those features.

It is another object of this invention to provide a method, apparatus, and program for evolving a neural network architecture to enable a network having the architecture to detect predetermined content included in electronic media information.

It is another object of this invention to provide a method, apparatus, and program for learning a neural network architecture which is optimized for enabling a neural network to accurately and reliably detect predetermined content included in electronic media information.

Further objects and advantages of this invention will become apparent from a consideration of the drawings and ensuing description.

The foregoing objects of the invention are realized by a method for operating at least one neural network, and a program and apparatus that operate in accordance with the method. The method comprises the steps of applying data indicative of predetermined content, such as commercial subject matter, and derived from an electronic media signal or information (e.g., a video and/or audio signal) including a representation of the predetermined content, to an input of the at least one neural network, wherein each neural network has an architecture specified by at least one corresponding parameter. The applying step causes the at least one network to generate at least one output indicative of either a detection or a non-detection of the predetermined content. The method also comprises a step of evolving the at least one parameter to modify the architecture of the at least one neural network, based on the at least one output, to thereby increase the accuracy at which that at least one neural network detects the predetermined content indicated by the data.

Preferably, prior to the step of applying, the at least one neural network is trained to determine optimal weight values for detecting the predetermined content. The training includes applying data derived from a sample signal including a representation of the predetermined content, to the input of the at least one neural network to cause the at least one neural network to generate at least one corresponding output, and varying at least one connection weight value of the at least one neural network, based on the at least one further output, using, for example, a back-propagation algorithm, or some other suitable neural network weight adjustment algorithm.

Data applied to the at least one neural network may represent, by example, at least one of a frame indicator, a luminance DC total value, a Mean Absolute Difference, a current bit rate, a chrominance DC total value, a chrominance DC differential value, a luminance DC differential value, a letterbox value, a time stamp, a scene change detection, a keyframe distance, number of edges, a color histogram, motion vectors, a number of faces and their locations, a number of text lines and their location, average motion over multiple frames, average luminance over multiple frames, average number of frames for which a face stays in focus (the average of the count of frames for which each face appears), and an average number of frames for which a text line stays in focus, derived from an electronic video signal, or audio properties such as pitch, MFCC, bandwidth, amplitude, etc., derived from an electronic audio signal, although in other embodiments, the applied data may include a given raw (non-encoded) signal or may represent other types of low-level, mid-level, and/or hi-level features derived from a given signal, depending on applicable operating criteria. As can be appreciated by one skilled in the art in view of this description, low-level features are features derived directly from a given content stream, mid-level features are derived from some combination of (i.e., are a function of) low-level features, and hi-level features are derived from mid-level (and possibly also some low-level) features. There is no limit on the number of such levels.

The at least one parameter preferably includes plural parameters or genes, a set of which forms a chromosome, and each neural network architecture preferably is specified by a corresponding one of the chromosomes. Also, the predetermined content may be any desired or undesired subject matter, such as commercial subject matter, violent or non-violent subject matter, etc.

In accordance with another aspect of this invention, the step of evolving includes performing a search algorithm, preferably a genetic algorithm, to evolve the at least one parameter.

In one embodiment of the invention, the evolving includes the steps of determining the accuracy at which the at least one neural network detects the predetermined content in the applying step, for each architecture of the at least one neural network, selecting at least one parameter, each specifying a corresponding one of the architectures, based on a result of the step of determining the accuracy, and producing at least one offspring parameter based on the at least one parameter selected in the step of selecting. The offspring parameter(s) and/or original parameters determined to yield the most accurate results are then employed in further applications of data to the at least one neural network, but this time while each network has an architecture specified by a corresponding one of those parameters, and, as a result, one or more further offspring parameters are produced again, if needed, until one or more parameters specifying a neural network architecture which can detect the predetermined content with a substantially maximized degree of accuracy are determined.

After such high performance (also referred to as "optimum") parameters have been identified, they can be used to construct the specified neural network architecture in any device, such as a user information appliance or server, for enabling predetermined content included in a media signal to be successfully and accurately detected therein. Software representing the neural network can reside on a server and/or in local information appliances, and the optimum parameters and/or neural network software itself can be forwarded from the server to the local information appliances or vice versa.

The present invention will be more readily understood from a detailed description of the preferred embodiments taken in conjunction with the following Figs.:

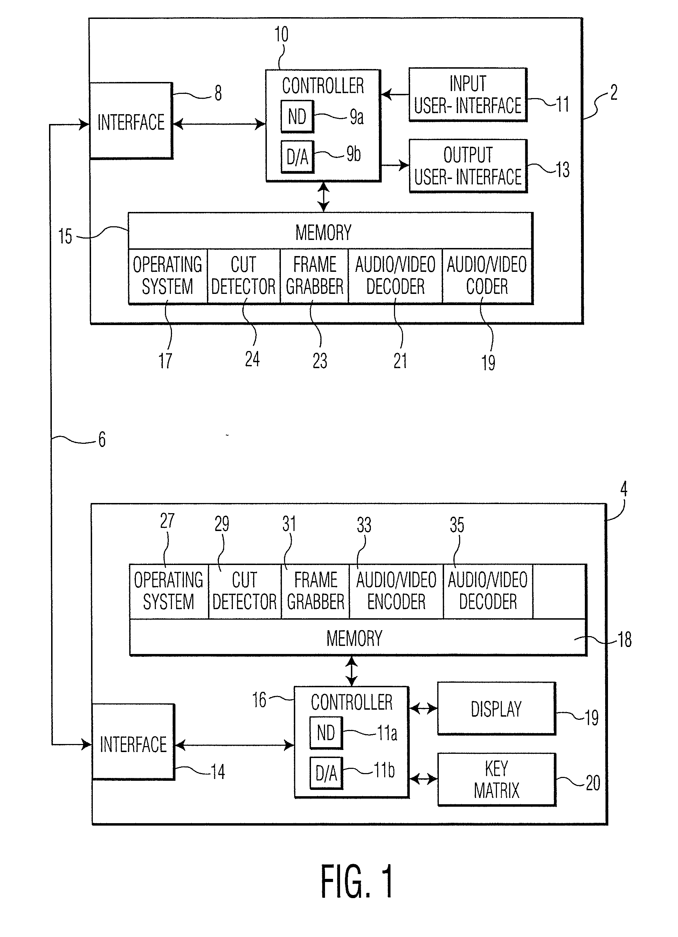

Fig. 1 is a block diagram of a hardware system 1 that is suitable for practicing this invention, wherein the system 1 comprises a server 2 and at least one user information appliance 4 that are constructed and operated in accordance with this invention, and which are bidirectionally coupled together through an interface 6.

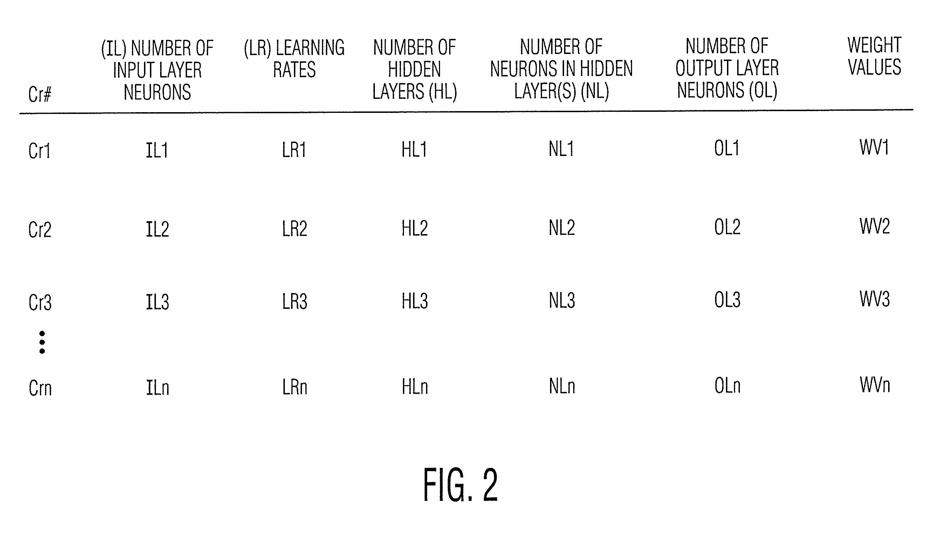

Fig. 2 is an example of a plurality of chromosomes Cr1-Crn that may be stored in a memory 15 of the server 2 and/or a memory 18 of the user information appliance 4 of Fig. 1, wherein the chromosomes Cr1-Crn each include genes (also referred to as parameters) that define a corresponding neural network architecture for use in detecting predetermined content, such as commercials, in provided electronic audio, video or other media information.

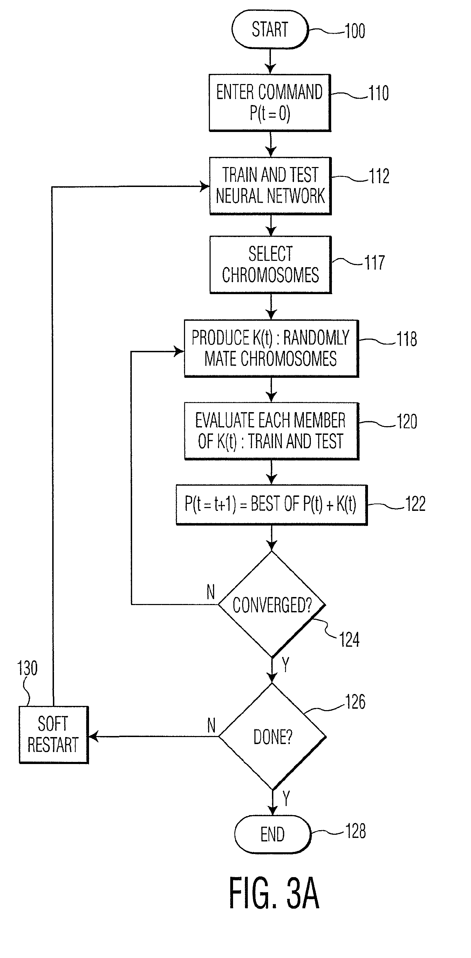

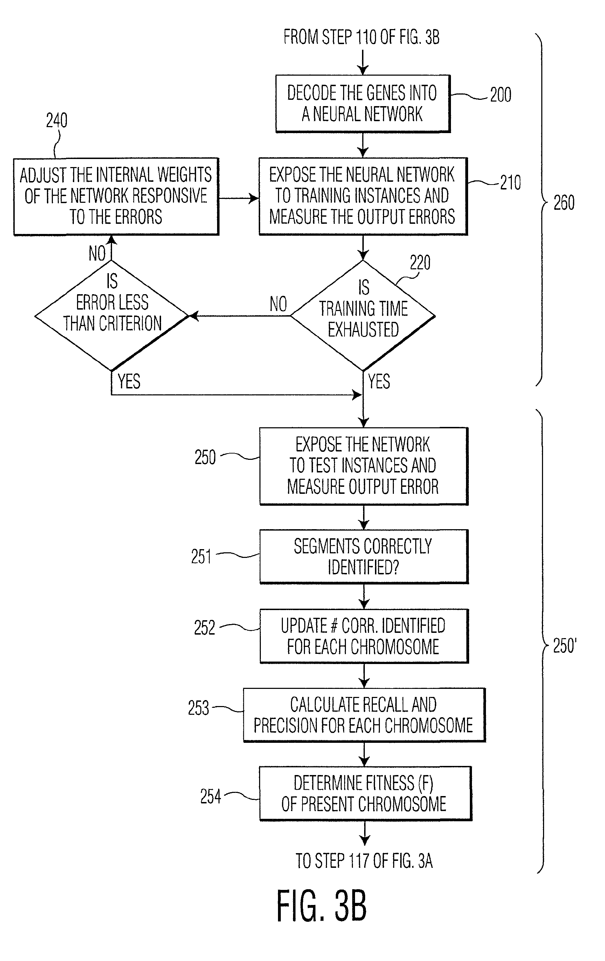

Fig. 3a is a logical flow diagram of a method in accordance with this invention for training and testing one or more neural networks to enable the network(s) to detect predetermined content, such as commercials, in provided electronic information, and for automatically learning parameters defining a neural network architecture which enables the predetermined content to be detected with a maximum degree of accuracy.

Fig. 3b is a logical flow diagram showing in detail sub-steps performed during step 112 of Fig. 3a.

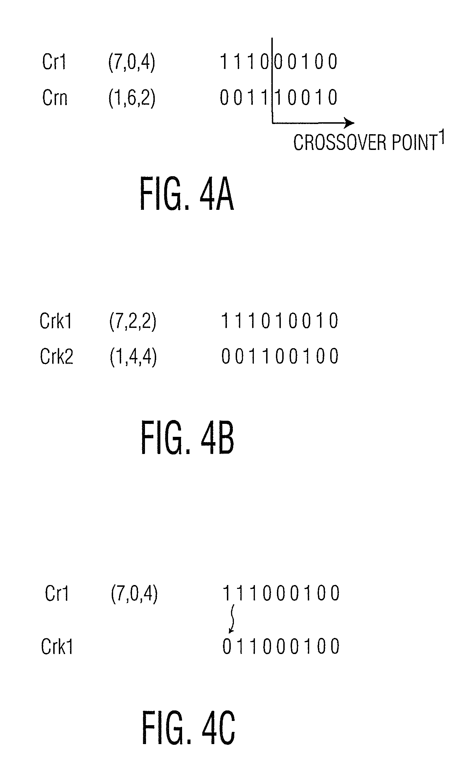

Figs. 4a-4c show examples of chromosomes that may be employed in the method of Fig. 3a, wherein Fig. 4a shows a representation of a cross-over point, Fig. 4b shows two offspring that result from the cross-over operation of Fig. 4a, and Fig. 4c represents an example of a gene mutation of a chromosome.

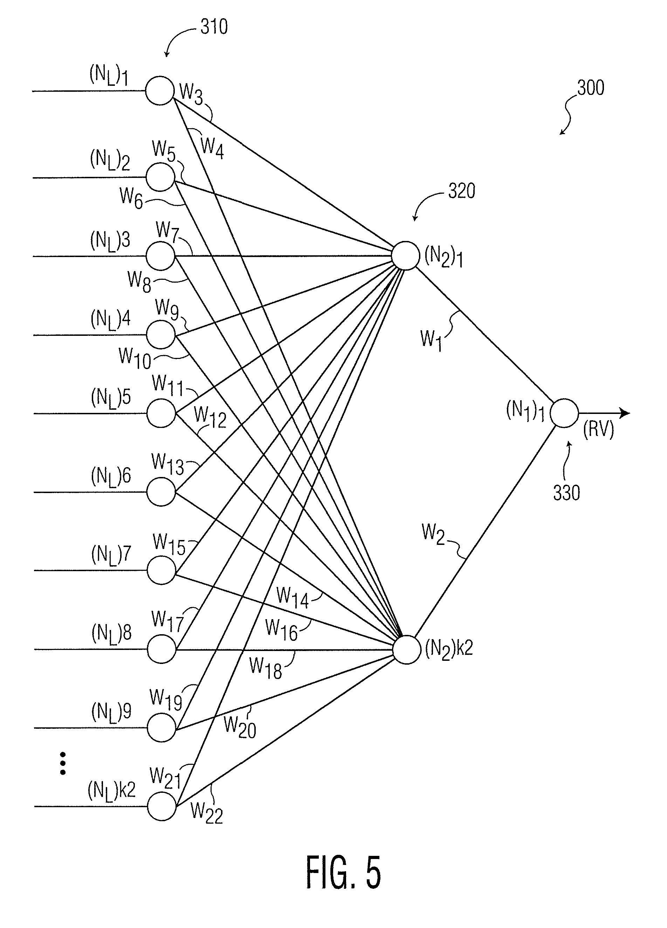

Fig. 5 depicts an example of a neural network employed during the performance of the method of Fig. 3a.

Identically labeled elements appearing in different ones of the Figs. refer to the same elements but may not be referenced in the description for all Figs.

Fig. 1 is a block diagram of a hardware system 1 that is suitable for practicing this invention. In the illustrated embodiment, the system 1 comprises a server 2 and at least one user information appliance 4. The server 2 and information appliance 4 are bidirectionally coupled to one another through an interface 6. The interface 6 may include various types of interconnecting equipment and interfaces for coupling the server 2 to the information appliance 4, such as, for example, one or more wires, cables, switches, routers, optical fibers, a wireless interface, and/or one or more networks (e.g., the Internet and/or other, proprietary network(s)), modems, and/or other suitable types of communication equipment/interfaces, depending on applicable system design and operating criteria, although, for convenience, no such equipment is shown in Fig. 1.

The individual information appliance 4 may include, for example, a PC, a personal video recorder (PVR), a video cassette recorder (VCR), a digital video recorder (DVR), a personal television receiver (PTR), a DVD player, and the like, although other suitable types of user information appliances also may be employed.

Although only a single server 2 and a single user information appliance 4 are shown in Fig. 1, the number and variety of user information appliances that may be in communication with the server 2 can vary widely, as can the number of servers 2 that are in communication with individual user information appliances, depending upon, for example, user needs and geographic location(s), applicable system design and operating criteria, etc. It should be noted that the teaching of this invention is not to be construed as being limited for use with any particular type of server computer or information appliance. In general, the teaching of this invention may be employed in conjunction with any suitable type of devices that are capable of processing electronic media information or signals, such as electronic video, audio, and/or combination video/audio information/signals, etc.

The server 2 is a computer or farm of computers that facilitate the transmission, storage, and reception of information between different points. The server 2 preferably comprises a controller (such as one or more microprocessors and/or logic arrays) (CPU) 10 for performing arithmetic and/or logical operations required for program execution. The controller 10 executes computer readable code, i.e., stored applications, such as those described below. The server 2 also comprises at least one communication interface 8 for bidirectionally coupling the controller 10 to external interfaces, such as the interface 6 and any other interfaces (not shown) to which the server 2 may be coupled, for enabling the server 2 to transceive information with external source and destination devices (e.g., information appliance 4) coupled those interfaces, although for convenience, only the interface 6 and appliance 4 are shown. That information may include signaling information in accordance with the applicable external interface standard employed, video, audio, and other data.

The server 2 preferably also comprises one or more input user-interfaces 11 that are each coupled to the controller 10, and at least one output user-interface 13 that also is coupled to the controller 10. The input user-interface 11 may include, for example, a keyboard, a mouse, a trackball, touch screen, and/or any other suitable type of user-operable input device(s), and the output user-interface 13 may include, for example, a video display, a liquid crystal or other flat panel display, a speaker, a printer, and/or any other suitable type of output device(s) for enabling a user to perceive outputted information.

The server 2 preferably also comprises one or more associated memories (e.g., disk drives, CD-ROM drives, read-only memories, and/or random access memories) 15 that are bidirectionally coupled to the controller 10. The memory 15 stores temporary data and instructions, and also stores various application programs, routines and operating programs that are used by the controller 10 for controlling the overall operation of the server 2. For example, an operating system 17 such as UNIX or Windows NT, preferably is stored in the memory 15, and a number of applications such as, for example, an audio/video encoder 19, an audio/video decoder 21, a frame grabber 23, and a cut detector 24 also may be stored in the memory 15, although other types of operating systems and application software may be employed as well, and/or one or more of the applications, such as applications 19, 21, and 23, may be embodied as separate hardware components within the server 2, rather than as application software. The encoder 19 is employed by the controller 10 to encode audio and/or video information in a conventional manner, when deemed necessary by the controller 10, and the decoder 21 is employed by the controller 10 to decode compressed audio and/or video data, when deemed necessary by the controller 10, in a conventional manner. Although for convenience the audio/video encoder 19 and decoder 21 are each represented as a single application in Fig. 1, there may be a separate encoder and a separate decoder provided for each of the audio and video information.

In accordance with one embodiment of the invention, the memory 15 also stores various counters and variables, such as, for example, an Actual#CommFrames variable, a TotalIdentified counter, and a #CorrIdentified counter, which are employed in a manner as will be described below. Preferably, the memory 15 also stores routines for implementing a method in accordance with this invention for automatically training and testing at least one neural network to enable the neural network to detect predetermined content, such as commercials, in provided electronic information, such as audio and/or video information, and for determining a neural network architecture which is optimized for enabling the predetermined content to be detected with at least a predetermined level of accuracy. That method will be described below in relation to Figs. 3a and 3b.

In accordance with an aspect of this invention, the memory 15 preferably also stores a plurality of chromosomes that are employed in the routines for implementing the method of the invention. Each chromosome preferably includes one or more genes which collectively define a neural network architecture. Referring to Fig. 2, an example is shown of the plurality of chromosomes stored in the memory 15, wherein, in this example, the chromosomes are identified as Cr1-Crn and each include genes that collectively represent a corresponding neural network architecture. For example, in accordance with one embodiment of the invention, each chromosome Cr1-Crn includes a gene (IL) representing a number of neurons of an input layer to be used in a corresponding neural network, one or more genes (LR) representing one or more learning rates to be used in conjunction with the neural network, a gene (HL) representing a number of hidden layers to be used in the neural network, one or more genes (NL) each representing a number of neurons (nodes) to be included in a corresponding hidden layer of the neural network, a gene (OL) representing a number of neurons to be included in an output layer of the neural network, and one or more genes (WV) representing one or more weight values to be used in a neural network, although in other embodiments, each chromosome Cr1-Crn may include only some of those genes or additional genes representing other predetermined architectural features of a neural network, depending on applicable operating criteria. For convenience, values of the genes (IL) to (WV) of chromosomes Cr1-Crn are represented as (IL1) to (ILn), (LR1) to (LRn), (HL1) to (HLn), (NL1) to (NLn), (OL1) to (OLn), and (WV1) to (WVn), respectively, in Fig. 2. Also for convenience, only a single gene (NL), a single gene (WV), and a single gene (LR) are represented in Fig. 2, although it should be understood that more than a single gene of each type may be provided, depending on, for example, the number of the hidden layers, nodes per layer, and node connections that are to be included in the neural network defined by the corresponding chromosome. Reference may be had to the publication by Robert Lippmann, entitled "An Introduction To Computing With Neural Nets", IEEE ASSP Magazine, Vol. 4, No. 2, pages 4-22, April 1987 (hereinafter "the Lippmann publication"), and to the publication by Tom M. Mitchell, entitled "Artificial Neural Networks", Machine Learning, Chapter 4, pages 81-127 McGraw-Hill, 1997 (hereinafter "the Mitchell publication"), for a general description of neural networks and their architectures, including at least some of the types of architectural features discussed above and represented in Fig. 2.

Preferably, the individual genes of each chromosome Cr1-Crn are each represented by a bit string having a predetermined bit length (e.g., 9 bits), although in other embodiments, other suitable types of values may be employed instead of bit strings, depending on applicable operating criteria. The manner in which the various chromosomes are employed in an exemplary embodiment of this invention will be described in detail below.

Referring again to Fig. 1, other components of the server 2 will now be described. Video and/or audio information originated from a source device, such as the information appliance 4 or some other device (e.g., a video camera, etc.) (not shown) may be provided to the server 2 and inputted therein through the at least one communication interface 8. The inputted information may be digital or analog information, and may be in compressed or uncompressed form, depending on, for example, the type of source device and associated external interface employed. An A/D converter 9a and a D/A converter 9b preferably also are included in the server 2, either as part of the controller 10 or as separate components. The A/D converter 9a can be programmed by the controller 10 for enabling analog information received from an external interface, such as interface 6, to be converted into digital form. The D/A converter 9b can be used by the controller 10 to convert digital information into corresponding analog information, before the information is outputted to the external interface 6, although, depending on the type of interface employed, that information need not be so converted before being forwarded to the interface 6.

The controller 10 and/or another component of the server 2, preferably has a capability of deriving, based on a program (e.g., encoder 19) stored in memory 15, various types of low-level, mid-level, and hi-level features from applied audio and/or video information, although in other embodiments, other circuitry may be provided within the server 2 for deriving such features. For example, predetermined feature data may be derived representing at least one of features such as a frame indicator, a luminance DC total value, a Mean Absolute Difference, a current bit rate, a chrominance DC total value, a chrominance DC differential value, a luminance DC differential value, a letterbox value, a time stamp, a scene change detection, a keyframe distance, number of edges, a color histogram, motion vectors, a number of faces and their locations, a number of text lines and their location, average motion over multiple frames, average luminance over multiple frames, average number of frames for which a face stays in focus (the average of the count of frames for which each face appears), average number of frames for which a text line stays in focus, audio properties such as pitch, MFCC, bandwidth, amplitude, etc., although in other embodiments, any other types of low-level, mid-level, and/or hi-level features which may be derived from a given audio and/or video signal may be provided, depending on applicable operating criteria. As another example, the encoder 19 may perform an MPEG encoding technique to provided video information, and generate, for example, one or more of the following predetermined feature data based on the information, as a byproduct of the compression process.

d1) frame indicator: a frame identifier that can be used to indicate the type of frame (I, P, or B).

d2) luminance DC total value: an indication of the luminance of an I-frame.

d3) quantizer scale: the quantization scale used for the DCT data.

d4) MAD (Mean Absolute Difference): the average of the magnitudes of the vectors used to describe a P or B image in terms of movement of blocks. There are several that may be generated: for example one representing only an upper or lower portion of a whole frame or one that includes all blocks of the frame.

d5) Current bit rate: The amount of data representing a group of pictures (GOP).

d6) Progressive/Interlaced value: An indicator of whether the image is an interlaced type usually found in conventional television video or progressive type, usually found in video from movies and computer animation.

d7) Chrominance DC total value. Analogous to luminance value but based on chrominance component rather than luminance.

d8) Chrominance DC differential value. Analogous to luminance value but based on chrominance component rather than luminance.

d9) Luminance DC differential value: This value represents the variation in luminance among the macroblocks of a frame. Low variation means a homogeneous image, which could be a blank screen.

d10) Letterbox value: indicates the shape of the video images by looking for homogeneous bands at the top and bottom of the frames, as when a wide-screen format is painted on a television screen.

d11) Time stamps: These are not indications of commercials, but indicate a location in a video stream and are used to mark the beginnings and ends of video sequences distinguishable by content.

d12) Scene change detection: This indicates a sudden change in scene content due to abrupt change in average MAD value.

dx) Keyframe distance: This is the number of frames between scene cuts.

These data d1) to dx) can be derived from standard parameters within a given MPEG stream, or can be derived/extracted from video information as frames are encoded by the encoder 19. In this regard, reference may be had to U.S. Patent Application No. 09/854,511, filed 5/14/2001, entitled "Video Content Detection Method And System Leveraging Data-Compression Constructs", for a description of that data, I, P, and B frames, and the manner in which such data is generated. That U.S. Patent Application No. 09/854,511 is incorporated by reference herein in its entirety, as if fully set forth herein. With regard to an example of features which may be derived from given audio information, reference may be had to a publication by Dongge Li, Ishwar K. Sethi, Nevenka Dimitrova, and Tom McGee, entitled "Classification Of General Audio Data For Content-Based Retrieval", Pattern Recognition Letters, Vol. 22, No. 5, pp. 533-544 (April 2001), for a description of examples of such features. According to a preferred embodiment of the present invention, at least some of the above predetermined feature data (derived by, for example, the controller 10, encoder 19, or some other component of server 2, and which, as described above, may include any desired type of low-level, mid-level, or hi-level features), which tends to indicate the presence of commercial subject matter, is inputted into one or more neural networks during the performance of the method of this invention, to be described in detail below.

Having described the server 2, the user information appliance 4 will now be described. The user information appliance 4 preferably comprises at least one communication interface 14 and a controller 16 (CPU) bidirectionally coupled thereto. The interface 14 bidirectionally couples the appliance 4 to one or more external communication interfaces, such as the interface 6 and any other external interfaces (not shown) to which the information appliance 4 may be coupled. The interface 14 enables the appliance 4 to transceive information with external source and destination devices (e.g., server 2) that may be coupled thereto, although for convenience, only the server 2 and one external interface 6 are shown. That information may include signaling information in accordance with the applicable external interface standard employed, video, audio, and other data.

A user interface of the user information appliance 4 includes an output user interface, such as a display 19, and an input user device, typically a key matrix 20, all of which are coupled to the controller 16, although in other embodiments, other suitable types of output and input user interfaces also may be employed. The key matrix 20 includes various user-interface keys that are used for initiating some operation of the user information appliance 4, such as, for example, PLAY, FAST FORWARD, STOP, REWIND, and PAUSE keys, various menu scrolling keys, etc. A MARK key for marking commercial content also may be included in the key matrix 20.

The user information appliance 4 also includes various memories, such as a RAM and a ROM, shown collectively as the memory 18. The memory 18 may store temporary data and instructions, various counters and other variables, and preferably also stores various applications, routines, and operating programs 27. For example, in accordance with one embodiment of the information appliance 4, the memory 18 may store an audio/video encoder 33, an audio/video decoder 35, a cut detector 29, and a frame grabber 31, although other types of operating systems and application software may be employed instead and/or one or more of the applications, such as applications 33, 35, and 31, may be embodied as separate hardware components within the appliance 4, rather than as application software. As for the encoder 19 and decoder 21 stored in the server 2, the audio/video encoder 33 stored in information appliance 4 may be employed by the controller 16 to encode audio and/or video information, and the audio/video decoder 35 may be employed by the controller 16 to decode compressed audio and/or video data, in a conventional manner. Although for convenience the audio/video encoder 33 and decoder 35 are each represented as a single application in Fig. 1, there may be a separate encoder and a separate decoder provided for each of the audio and video information. In accordance with a preferred embodiment of the invention, the controller 16 and/or another component of the server 2, preferably has a capability of deriving, based on a program (e.g., encoder 33) stored in memory 18, various types of low-level, mid-level, and hi-level features from applied audio and/or video information, although in other embodiments, other circuitry may be provided within the appliance 4 for deriving such features. For example, one or more predetermined feature data similar to that described above in relation to the server 2 may be derived in the appliance 4, although for convenience, such data will not now be further described. Also, in accordance with one embodiment of the invention, at least some of the routines stored in the memory 18 implement a method in accordance with this invention, to be described below in relation to Figs. 3a and 3b. Moreover, in one embodiment of the invention, the memory 18 also stores at least some of the various counters, variables, and/or chromosomes described above in relation to the server 2 and Fig. 2, although the values may be different from those stored in the server 2, and for convenience, they will not now be further described.

Input video and/or audio information originated from a source device, such as the server 2 or some other source device (e.g., a video camera, etc.) (not shown), may be received within the appliance 4 through the at least one communication interface 14. Like the information inputted into the server 2, the information inputted into the information appliance 4 may be in digital or analog form, compressed or uncompressed, depending on, for example, the type of source device and associated external interface employed. Also like the server 2, an A/D converter 1 1a and a D/A converter 11b also may be included in the information appliance 4, either as part of the controller 16 or as separate components. The A/D converter 11amay be programmed by the controller 16 for enabling analog information received by the appliance 4 from an external interface, such as interface 6, to be converted into digital form, before being provided to the controller 16. The D/A converter 11b may be employed to convert digital information into corresponding analog information, before the information is outputted to the external interface 6, although, depending on the type of interface 6 employed, that information need not be so converted before being forwarded to the interface 6.

Having described the various components of the system 1, an aspect of this invention will now be described, with reference to the flow diagram of Fig. 3a. In accordance with this aspect of the invention, a user can identify selected individual frames or other segments of one or more sample video clips, and/or selected individual segments of one or more sample audio clips, as either including predetermined content, such as commercial subject matter, or as not including such predetermined content. Thereafter, one or more of the sample audio and/or video clips are employed in training one or more neural networks each having an architecture defined by a number of parameters, namely the genes of a corresponding chromosome Cr1-Crn described above, in an attempt to enable the networks to detect such predetermined content. After the training procedure is performed, the fitness of each neural network architecture is determined by measuring an output of the network(s) in response to the application of one or more of the same, or preferably different, sample audio and/or video clips to the networks, and determining how accurately the output identifies clip segments as either including or not including the predetermined content. The results of that determination are then employed to further determine which network(s) is/are the most fit amongst the other employed networks. Thereafter, selected parameters defining the architecture of the most fit network(s) are evolved, if needed, through use of a search algorithm, such as a genetic algorithm, until parameters values are determined which define an architecture that is considered to be the best (optimized) amongst all other previously employed architectures, for enabling the predetermined content to be detected with a highest degree of accuracy amongst all other employed architectures. It should be noted that, although the invention is described below in the context of an example in which audio and/or video clip samples are evaluated for the presence of commercial content, the invention is not intended for use only in detecting commercial content. For example, in other embodiments, the method of the invention may be employed for use in detecting other types of information content of interest, such as, for example, explicit, violent, or other content types, and/or the invention may be employed to detect predetermined content in any applicable type of media information of interest, such as only audio or only video information, depending on applicable operating criteria.

Referring now to Fig. 3a, in step 100 the method is started, and it is assumed that the server 2 is provided with one or more sample audio and/or video clips that are stored in the memory 15, and that the sample clips each include at least one commercial segment (as used herein, the term "commercial segment" means a predetermined segment of either audio information or video information (e.g., one or more successive video frames) that includes commercial content, and forming a single commercial). Preferably, a generous number of sample clips having a variety of commercials is employed to ensure robust performance results. It also is assumed that the sample audio and/or video clips are stored in the memory 15 in association with content identifier information specifying (1) which particular segments (e.g., predetermined temporal length or number of frames) of each clip include and/or do not include commercial content, (2) segment numbers identifying those segments, and (3) a variable Actual#CommFrames representing the total number of segments (in each clip) that include commercial content. For example, the sample audio and/or video clips and content identifier information may be downloaded from any external source through the interface 8, in which case the clips and content identifier information are forwarded to the controller 10 and then stored by the controller 10 in the memory 15. The sample audio and/or video clips may be, for example, a portion of a television signal or Internet file broadcast downloaded from the interface 6, clips uploaded from the user information appliance 4, a clip downloaded from a particular web site, or audio and/or video signals originated from any other source (not shown) that may be coupled to the server 2. As another example, the content identifier information may be stored in the memory 15 after the sample video clips already are stored in that memory. For example, while viewing individual segments (e.g., frames) of a sample video clip on the display 13, or listening to an audio clip segment played over output user-interface 13, the user may enter content identifier information specifying whether or not each individual segment includes commercial content, into the server memory 15 through the input user interface 11, and then that information is stored in association with the segment information. It further is assumed in step 100 that the genes of the individual chromosomes Cr1-Crn are initialized to some predetermined values (e.g., represented by a bit string), either as specified by the user or by the routine stored in memory 15, and, as a result, an initial population P(t) for t = 0 of the chromosomes is provided, where, for the purposes of this description, 't' is a variable representing the population level or a "time", as a generation counter.

Thereafter, in step 110 it is assumed that, for example, the user operates the input user interface 11 to enter command information into the controller 11 specifying that one or more of the sample audio and/or video clips be examined for the presence of predetermined content, namely, in this example, commercial subject matter. In response to the command information being inputted into the controller 10 in step 110, the controller 10 performs operations that are identified collectively as step 112 in Fig. 3a. For this exemplary embodiment, those operations are shown in detail by the method steps shown in Fig. 3b, and are performed to train and test neural networks in the above-described manner, wherein the training procedures are identified collectively by reference numeral 260 in Fig. 3b, and the testing procedures are identified collectively by reference numeral 250' of Fig. 3b. The neural networks that are trained and tested have initial architectures that are defined by corresponding chromosomes Cr1-Crn within a present population P(t) of chromosomes, such that each architecture is specified by a corresponding one of those chromosomes. In a preferred embodiment of this invention, the operations shown in Fig. 3b are performed separately for each chromosome of the population P(t) (i.e., for each neural network architecture), so that multiple performances of those operations occur, one for each architecture, either in parallel or in series with one another, and so that there is at least one performance of those operations for each chromosome. For convenience, however, the following description will be made in the context of the steps shown in Fig. 3b being performed for only a single one of the chromosomes (i.e., a single architecture), although it should be understood that those steps are performed for each chromosome separately. Also for convenience, the following description will be made in the context of only a single sample audio or video clip being applied to train the neural network, although it should be noted that more than a single clip may be employed to further ensure that the network is trained properly.

In step 200 of Fig. 3b, the training procedure is entered, and it is assumed that the controller 10 decodes the genes of a given one of the chromosomes Cr1-Crn, such as chromosome Cr1, to form a neural network having an architecture defined by those genes (although, as described above, this step preferably also is performed to form networks defined by other chromosomes Cr1-Crn as well, either in series with or parallel to the performance of the step for chromosome Cr1). An example of a neural network 300 formed as a result of the performance of step 200 is shown in Fig. 5, wherein in this example, the network 300 has an architecture defined by the genes (IL1), (LR1), (HL1), (NL1), (OL1), and (WV1) of the chromosome Cr1, although it should be noted that the network may have other architectures instead, depending on the genes of the chromosome being employed. The gene (IL1) specifies the number of nodes $(N_L)_1$ to $(N_L)_{k2}$ included in an input layer 310 of the network 300, wherein each of the nodes in this example corresponds to one respective type of predetermined feature data of interest, such as one of the type of feature data described above (by example only, one of data d1) through dx), the gene (LR1) specifies a learning rate to be used in a back-propagation algorithm (referred to below) employed for adjusting weights of the network 300, and the gene (HL1) specifies the number of hidden layers 320 included in the network 300 (for convenience, only one such layer 320 is shown in Fig. 5, although more or less than that number of hidden layers 320 may be employed instead). Also, gene (NL1) specifies the number of nodes $(N_2)_1$ to $(N_2)_{k2}$ included in each hidden layer 320, the gene (OL1) specifies the number of nodes $(N_1)_1$ included in the output layer 330 of the network 300, and the gene (WV1) collectively specifies the various weight values w1-wn of the weighted connections represented in Fig. 5, although it should be noted that the number of nodes included in the layers 310 and 320 and the number of weight values and layers included in a given neural network employed in this invention may differ from those shown in Fig. 5, depending on the chromosome employed.

After step 200 is performed, control passes to step 210 where predetermined feature data representing features derived from a selected sample audio or video clip is scaled, if necessary, to range from '0' to '1' so that the network inputs have values in the same interval as that of individual node activations, and then the different types of data are applied to respective one of the inputs of nodes $(V_L)_1$ to $(N_L)_{k2}$ of the input layer 310. Preferably each application is performed by applying predetermined feature data derived from a predetermined segment of the sample audio or video clip to the input layer 310 of the network 300. By example only, the predetermined segment may include a predetermined temporal length of an audio or video clip (e.g., a two second length, assuming a frame rate of thirty frames per second, in the case of video information), and may form the complete clip or only a sub-portion thereof. Also by example, in the case where the clip includes video frames, predetermined feature data representing a predetermined number (e.g., four) of different features derived from selected ones of the frames (e.g., every fifth frame) of the clip may be applied to the input layer 310 (in this case, the number of neurons in the input layer 310 would be forty eight (12*4=48)). In response to the application of data to the input layer 310, the network 300 operates in a known manner to generate an output value (Rv) corresponding to the presently applied segment. In this regard, reference may be had to the Lippmann publication for a description of manner in which nodes of a neural network operate. In accordance with one embodiment of the invention, the nodes $(N_L)_1$ to $(N_L)_{k2}$ of the input layer 310 and the node $(N_1)_1$ of the output layer 330 each operate in accordance with steps 2 and 3 described in Box 6 of page 17 of the Lippmann publication (or steps 2 and 3 described in Box 4 of page 13 of that publication), by computing a weighted sum of the inputs, and subtracting a predetermined threshold from the weighted sum to generate a resulting output, and the nodes $(N_2)_1$ to $(N_2)_{K2}$ of the hidden layers 320 of the network 300 each operate in accordance with a "Multi-Layer Perceptron" described at page 15-18 of the Lippmann publication, although in other embodiments, each node of the neural network 300 may operate in accordance with other suitable nodal techniques known in the art, depending on applicable operating criteria. As a result of the data corresponding to a particular clip segment being applied to the neural network 300, the resulting value (Rv) corresponding to the segment is outputted by the output layer node $(N_1)_1$. The controller 10 then employs that value (Rv) to measures an output error, if any. For example, according to a preferred embodiment of the invention, that measurement is performed by determining a difference between a value (e.g., '1', representing commercial content, or '0', representing non-commercial content) specified by the content identifier information (from memory 15) corresponding to the present segment, and the value (Rv) outputted by the neural network 300. As an example, if the content identifier information corresponding to the present segment specifies '1' (indicating that the segment includes commercial content), and the outputted value (Rv) is 0.5, then the controller 10 determines that there is an error of 0.5. Also by example, if the content identifier information corresponding to the present segment specifies '0' (indicating that the segment does not include commercial content), and the outputted value (Rv) is 0.5, then the controller 10 determines that there is an error of -0.5.

The foregoing procedures of step 210 are performed for each predetermined segment of the present sample audio or video clip being evaluated, so that a value (Rv) and a measured error (Ev) value corresponding to each individual segment are generated in step 210. Thereafter, control passes to step 220, where a determination is made by the controller 10 as to whether or not the training procedure should be terminated. In accordance with one embodiment of the invention, that step is performed by determining if the training procedure, and in particular step 210 of the procedure, has been performed a predetermined number of times since the decoding step 200 was last performed, although, it should be noted that other suitable types of decisions for determining whether or not the training procedure should be terminated may be employed instead, depending on applicable operating criteria. For example, this step may be performed based on one or more of the genes.

If the performance of step 220 results in a determination of "Yes" ('Y' at step 220), control passes to step 250, which will be described below. Otherwise, if step 220 results in a determination of "No" ('N' at step 220), control passes to step 230, where a determination is then made as to whether or not an error criterion has been satisfied. In accordance with one embodiment of the invention, that step 230 is performed by first squaring the individual error values (Ev) measured as a result of the predetermined segment of the present sample audio or video clip being exposed to the neural network 300 in the most recent performance of step 210, then calculating a sum of those squares, and then comparing the resulting sum of the squares to a predetermined threshold error value to determine whether or not the resulting sum of the squares is less than the predetermined threshold error value. In accordance with another embodiment of the invention, the squaring and sum of the squares is not calculated in step 230, and instead step 230 is performed by simply determining whether each individual measured error value (Ev) determined in step 210 is less than another predetermined threshold error value, so that the determination is made on a segment by segment basis, rather than based on a sum of all squared error values (Ev) for all segments of the present clip, although in other embodiments, the determination may be made based on another selected set or subset of measured error values (Ev), depending on applicable operating criteria.

Referring again to step 230, if it is determined in that step that the resulting sum of the squares is less than the predetermined threshold error value ('Y' in step 230), then control passes to step 250, which will be described in detail below. Otherwise, if it is determined in step 230 that the resulting sum of the squares is not less than the predetermined threshold error value ('N' in step 230), then control passes to step 240 where one or more of the weight values w1 -wn employed by the neural network 300 are adjusted in accordance with a predetermined internal weight adjustment algorithm. Preferably, the predetermined internal weight adjustment algorithm is a back-propagation training algorithm known in the art, such as, for example, that described in Box 6 of page 17 of the Lippmann publication (see, e.g., step 4), or the back-propagation algorithm described on page 98 of the Mitchell publication. It should be noted, however, that the predetermined internal weight adjustment algorithm need not necessarily be performed in accordance with the back-propagation algorithms referred to above, and that in other embodiments of the invention, other suitable types of algorithms for adjusting the weight values of a neural network may be employed instead, depending on applicable operating criteria and the types of neural networks employed (e.g., feed forward, non-feed forward, etc.).

After one or more weight values w1-wn are adjusted in step 240, control passes back to step 210 where, according to a preferred embodiment of the invention, the method then continues in the same manner as described above, but preferably this time to train the network using either the same sample audio or video clip segment(s) as used above or different sample audio or video clip segment(s). That is, step 210 is performed by applying to the network, predetermined feature data derived from at least one sample audio or video clip segment to the input layer 310 of the network 300, and then any error value(s) (Ev) are measured at the output of layer 330, and the method then proceeds to step 220, etc., where it continues in the above-described manner.

Referring now to step 250, the first step of the test procedure will now be described. Step 250 is entered into after a determination of "Yes" is made in either of steps 220 or 230, wherein in either case, the neural network 300 is now considered to be trained based on the sample audio or video clip(s) to which the neural network 300 was exposed in the training procedure 260. The weight values w1-wn which were determined in the most recent performance of step 240 are maintained for use in step 250.

In step 250, the first part of the test procedure is performed by exposing the neural network to at least one other sample audio or video clip (depending on whether the procedure 260 employed audio or video segment(s)) segment to generate a measured error value in the above-described manner. For example, predetermined data representing features derived from a predetermined segment (e.g., 2 seconds) of that other sample audio or video clip is applied to the nodes $(N_L)_1$ to $(N_L)_{k2}$ of the input layer 310, to cause the network 300 to generate an output value (Rv) from the node $(N_1)_1$ and the controller 10 then calculates a measured error value (Ev) for each frame, in the above-described manner. Preferably, the sample audio or video clip employed in the test procedure of step 250 is different from the sample audio or video clip used during the training procedure 260, although the invention is not necessarily limited only to such a case.

In accordance with a preferred embodiment of the invention, if the error value (Ev) measured for a particular clip segment in step 250 is greater than a predetermined value, such as, e.g., 0.5 or some other value, the segment is deemed to include commercial content, and the TotalIdentified counter corresponding to the present chromosome Cr1 and representing the total number of segments (of the present clip) identified as including commercial content, is increased by '1', and the number of the present segment is recorded in the memory 15. By contrast, if the measured error value is 0.5 or less, the segment is deemed to not include commercial content, and the TotalIdentified counter is not increased. In either case, after step 250 is performed for each segment of the sample audio or video clip being evaluated, control passes back to step 251, where the method then continues in the following manner.

Step 251 is entered into after step 250 is performed for the present chromosome of the set of chromosomes Cr1-Crn of initial population P(t), stored in the memory 15. For example, the performance of step 250 for the present chromosome, such as Cr1, results in there being stored in the memory 15, for that chromosome, a respective TotalIdentified counter value. The TotalIdentified counter stored for that chromosome represents the total number of audio or video clip segments (if any, in a sample audio or video clip) that were identified in step 250 as including commercial content by the neural network having an architecture defined by that chromosome, and information specifying the segment numbers of those segments. Now, in step 251 the controller 10 determines whether or not the segments (if any) identified as including commercial content in step 250 were correctly identified as including commercial content, by correlating the identified segments to the corresponding content identifier information (specifying whether or not the segments include commercial content) originally stored in memory 15 in step 100 of Fig. 3a. For example, assuming that a particular segment was identified as including commercial content during the earlier performance of step 250 for the chromosome Cr1, and assuming that the content identifier information stored in memory 15 specifies that the same segment does indeed include commercial content, then that segment is determined in step 251 as having been correctly identified as including commercial content. Then control passes to step 252 where the controller 10 updates the value of #CorrIdentified associated with the present chromosome Cr1 stored in memory 15 so that the updated value specifies the number of segments which were determined in step 251 as having been correctly identified (as including commercial content during the performance of step 250) for that chromosome. After step 252 is performed, control passes to step 253 where values for the counters #CorrIdentified (updated in step 252) and TotalIdentified (updated in step 250) associated with the present chromosome are employed by the controller 10 to determine a Recall and a Precision for that chromosome, using the following formulas F1 and F2, respectively:

$$Recall = \#CorrIdentified / Actual\#CommSegments \qquad\qquad F1$$

$$Precision = \#CorrIdentified / TotalIdentified \qquad\qquad F2.$$

For example, assuming that the earlier performance of steps 250 and 251 for the present chromosome Cr1 results in a determination of the counter values #CorrIdentified and TotalIdentified shown in Table I below for that chromosome, and that the value of Actual#CommSegments for the sample clip segments used in step 250 is '90', then the performance of the formulas F1 and F2 in step 253 results in the Recall and Precision values shown in Table I being calculated for the chromosome. Those values are stored in the memory 15 by the controller 10.

TABLE I

| Cr# | #CorrIdentified | Actual#Comm-Segments | TotalIdentified | Recall | Precision |
|-----|-----------------|----------------------|-----------------|--------|-----------|
| Cr1 | 80 | 90 | 100 | 0.888 | 0.8 |

After step 253 is performed for the present chromosome, control passes to Step 254 which is performed by determining the fitness (F) of the present chromosome, preferably using the following formula (F3), although in other embodiments, any other suitable fitness determination formula may be used instead:

$$(F) = (2*(Precision)(Recall))/(Precision+Recall) \qquad\qquad F3.$$

Thereafter, control passes to step 117 of Fig. 3a, where the method then continues therefrom. It should be understood in view of this description that the procedures 260 and 250' are performed for each individual chromosome Cr1-Crn of the set of chromosomes of population P(t), stored in the memory 15. For example, the performance of step 250 for each of the initial chromosomes Cr1-Crn of population P(t), results in there being stored in the memory 15, for each chromosome, a respective TotalIdentified counter value, representing the total number of audio or video clip segments (if any, in a sample clip) that were identified in step 250 (during the performance of step 112 for that chromosome) as including commercial content by the neural network having an architecture defined by that chromosome, and information specifying the segment numbers of those segments. Also, as a result of steps 251-254 being performed for each individual chromosome Cr1-Crn, a separate value of #CorrIdentified is provided for each chromosome, to indicate the number of segments correctly identified during step 250 for that chromosome, and a separate value of fitness (F) also is provided for each chromosome. For example, assuming that the performance of steps 250-252 for each individual chromosome Cr1-Crn results in a determination of the counter values #CorrIdentified and TotalIdentified shown in Table II below for each chromosome, and that the value of Actual#CommSegments for the sample clip segments used in step 250 is '90', then the performance of the formulas F1 and F2 in step 253 results in the Recall (Re) and Precision (Pr) values shown in Table II being calculated for the chromosomes, and the performance of formula F3 in step 254 results fitness (F) values being calculated for the chromosomes. Those values are stored in the memory 15 by the controller 10.

TABLE II

| Cr# | #CorrIdentified | Actual#Comm-Segments | TotalIdentified | Re | Pr | F |
|-----|-----------------|----------------------|-----------------|------|------|------|
| Cr1 | 80 | 90 | 100 | 0.888 | 0.8 | 0.84 |
| Cr2 | 90 | 90 | 90 | 1.0 | 1.0 | 1.0 |
| Crn | 75 | 90 | 95 | 0.833 | 0.79 | 0.8 |

In step 117, according to one embodiment of the invention, the controller 10 selects certain ones of the chromosomes by employing a predetermined selection strategy that is based on the fitness (F) values determined in step 254. Any suitable type of selection strategy may be employed in step 117, such as, for example, a stochastic selection process, a random process with a probability of selection that is proportional to fitness, a strategy which selects chromosomes yielding the highest 50% of all of the fitness values determined in step 254, a strategy which selects chromosomes yielding fitness values equaling or exceeding a predetermined value, or another suitable fitness selection strategy, etc., depending on predetermined operating criteria. In this regard, reference may be had to the publications entitled "Genetic Algorithms And Evolutionary Programming", Artificial Intelligence: A Modem Approach, 1995, Chapter 20.8, pages 619-621, by Stuart Russell et al. (hereinafter "the Genetic Algorithms publication"), "The CHC Adaptive Search Algorithm: How To Have Safe Search When Engaging In Nontraditional Genetic Recombination", Foundations Of Genetic Algorithms, 1991, pages 265-283, by Larry Eshelman (hereinafter "the Eshelman publication"), for a description of examples of fitness selection strategies that may be employed in step 117, although other suitable strategies may be employed instead, and the manner in which the controller 10 would be programmed to perform such strategies would be readily appreciated by one skilled in the relevant art in view of this description. Reference also may be had to U.S. Patent 5,390,283, "Method for Optimizing of a Pick and Place Machine", by Larry Eshelman and James D. Schaffer, issued on February 14, 1995, for a description of the use of a CHC algorithm for determining a near-optimal allocation of components in a "pick and place" machine. That U.S. patent is incorporated by reference herein in its entirety. In the present exemplary embodiment, and for the purposes of this description, step 117 is performed by selecting the chromosomes yielding the highest 50% of all of the fitness values (F) calculated during the previous performances of step 254 for each chromosome.

After step 117 is performed, control passes to step 118 where, according to one embodiment of the invention, each individual chromosome selected in step 117 is randomly paired with another one of those selected chromosomes, and then mated with that other selected chromosome, if the paired chromosomes are determined to be non-incestuous. For example, in one embodiment, after the chromosomes are paired together in step 118 (Fig. 4a shows an example of two randomly-paired chromosomes Cr1 and Crn), a determination is made as to whether or not the paired chromosomes are incestuous by examining, for each pair, whether or not the values of chromosomes of the pair differ from one another (e.g., as measured by a Hamming distance) by at least an incest threshold value, such as a predetermined bit string length or some other suitable value. As an example, six of the corresponding bits of the chromosomes pair in Fig. 4a differ from one another, and thus, in a case where the incest threshold value is 1/4 of the bit string length, the performance of that portion of step 118 results in a determination that those chromosomes are not incestuous. Thereafter, in accordance with one embodiment of the invention, the chromosomes determined to be non-incestuous are then mated by randomly choosing a cross-over point 350, and then swapping the bits of the pair appearing after the cross-over point so that offspring chromosomes are generated (or this may be accomplished using HUX; see the Eshelman publication)). Fig. 4b shows an example of such offspring chromosomes Crk1 and Crk2 generated by the parent chromosomes of Fig. 4a (step 118). The crossover operation may be performed in any suitable manner known in the art, such as that described in relevant portions of the Eshelman publication referred to above.

In accordance with another embodiment of the invention, the production of offspring in step 118 may be performed by, for example, randomly mutating the value of each chromosome by flipping a predetermined portion (e. g., 35%) of the bits of each chromosome, at random (with independent probability), in a manner as known in the art. Fig. 4c shows an example of one of the parent chromosomes Cr1 of Fig. 4a and an offspring chromosome Crk1 resulting from the mutation of that parent chromosome. In still another embodiment of this invention, the mutation performed during step 118 may be performed by randomly choosing a cross-over point and swapping bits in the above-described manner, and then randomly mutating the resultant bit strings (individual bits), or vice versa, in the manner described above.

The performance of step 118 results in there being a plurality of offspring chromosomes Crk1-Crki provided (which hereinafter also are referred to collectively as offspring population K(t)) (assuming, in the case of sexual reproduction, that at least one of the parent chromosome pairs was determined to be non-incestuous in that step, wherein for that embodiment each pair of offspring chromosomes was generated from a corresponding pair of parent chromosomes). After step 118 is performed, control passes to step 120 where each of the chromosomes Crk1-Crki is employed, in lieu of the parent chromosomes Cr1-Crn of initial population P(t), in training and testing individual neural networks having an architecture defined by respective ones of those chromosomes Crk1-Crki, wherein those training and testing procedures are the same as those described above in relation to step 112 (steps 260 and 250-254, respectively) (although different chromosomes are employed and/or the sample audio or video clip segments employed may or may not be different than those employed in step 112). That is, step 120 is performed in the same manner as steps 260 and 250-254 described above, except that neural networks having architectures defined by the respective offspring chromosomes Crk1-Crki are employed in those steps in place of the neural networks having architectures defined by the parent chromosomes Cr1-Crn of initial population P(t). Since steps 260 and 250-254 were already described above, for convenience a further detailed description of those steps will not be made herein. It should be clear to one skilled in the relevant art in view of this description, however, how those steps are performed employing the offspring chromosomes Crk1-Crki. The performance of step 120 results in a determination of a fitness value (F) yielded for each offspring chromosome Crk1-Crki (as in step 254), in the same manner as described above.

Thereafter, control passes to step 122 where, in accordance with one embodiment of the invention, another selection of chromosomes is made, but this time the selection is made from amongst all chromosomes of the previous chromosome population P(t) (e.g., Cr1-Crn) and all chromosomes of offspring population K(t) (e.g., Crk1-Crki), to generate a new population P(t=t+1), by employing the same chromosome fitness selection strategy as that described above in relation to step 117, or any other suitable existing or later developed selection strategy. Thereafter, in step 124 a convergence determination is made, by determining whether (a) the value of the incest threshold is equal to '0' and (b) the fitness (F) of each chromosome selected in step 122 is the same. If either (a) or (b) is not true, then a determination is made as to whether there were no chromosomes selected from population K(t) (i.e., none survived) in step 122. If none were selected in that step, then the value of the incest threshold is decreased by 1' ("N" in step 124), and control then passes back to step 118 where the method then proceeds therefrom in the above described manner, but to mate the chromosomes of the newly generated population. If, on the other hand, both (a) and (b) are determined to be true in step 124 ("Y" in step 124), then control passes to step 126.

In Step 126, a determination is made as to whether or not the method should be terminated. In accordance with one embodiment of the invention, that step is performed by determining if either (i) a predetermined number of chromosomes of offspring population K(t) have been evaluated in step 120 since the method was first began in step 100, or (ii) a restart step 130 (described below) has been performed a predetermined number of times since the method began in step 100. In other embodiments of the invention, step 126 may be performed to determine if both of the conditions (i) and (ii) have been satisfied, or, in other embodiments, the determination may be made as to only one of the conditions (i) and (ii), although, it should be noted that other suitable types of decisions besides those described herein may be employed instead, depending on applicable operating criteria.

If the performance of step 126 results in a determination of "Yes" ("Y" in step 126), control passes to step 128, which will be described below. Otherwise, if step 126 results in a determination of "No" ("N" at step 126), control passes to step 130, where a soft restart procedure is performed. In a preferred embodiment of the invention, the soft restart procedure of step 130 is performed by copying the chromosome (of the population P(t=t+1)) which, among all of the chromosomes of population P(t) evaluated in the previous performance of step 112 (step 254) and offspring population K(t) evaluated in the most recent performance of step 120, yielded the highest fitness (F) value (among all chromosomes of newly generated population P(t=t+1)), to provide plural (e.g., fifty) copies of that chromosome (also referred to herein as a current best one of all of those chromosome). Preferably, each of the resulting copies, except one, is then mutated by flipping a predetermined proportion (e.g., 35%) of the bits of the copy, at random without replacement. As a result of step 130, a single, non-mutated copy of the chromosome which yielded the highest fitness (F) value, and a plurality of mutated versions of that copied chromosome, are provided. Those chromosomes (including the non-mutated and mutated copies) collectively form a new chromosome population P(t). Thereafter, control passes from step 130 back to step 112, wherein the method then continues in the above described manner, but with the new chromosome population P(t) being employed for defining corresponding neural network architectures.

Step 128 of Fig. 3a will now be described. In step 128 the controller 10 stores information in the memory 15 specifying that the gene values of a current best chromosome remaining in the population P(t=t+1) after both steps 124 and 126 consecutively resulted in determinations of "Yes", be employed in future operations for detecting the presence of commercial content in provided audio or video information. Those gene values, which in this example are (IL2), (LR2), (HL2), (NL2), (OL2), and (WV2) (Fig. 2), are considered to be the best (e.g., "optimum" or high performance) of all the chromosome gene values (IL), (LR), (HL), (NL), (OL), and (WV) (Fig. 2), respectively, and define the best of all of the architectures specified by the chromosome gene values (IL), (LR), (HL), (NL), (OL), and (WV), for detecting commercial content in audio/video information with a maximum degree of accuracy. Preferably, in step 128 the neural network having an architecture defined by those gene values is stored in memory 15, although in other embodiments only the gene values may be stored.

At some later time, it is assumed that a user of the server 2 operates the input user interface 11 to enter information into the server 2 specifying that a selected audio and/or video stream, such as an audio and/or video clip originally provided in the memory 15 in step 100 or another audio and/or video information signal provided to the server 2 (e.g., a downloaded or uploaded clip, a received broadcast audio/video information stream, or one or more otherwise provided audio and/or video clips or other audio and/or video segments, etc.), be evaluated for the presence of, for example, commercial subject matter. As a result, in accordance with one embodiment of the invention, the controller 10 responds by retrieving either the optimized neural network or the optimized chromosome gene values (IL2), (LR2), (HL2), (NL2), (OL2), and (WV2) identified in step 128 (and, in the latter case, then decoding the retrieved gene values into the neural network having an architecture defined by those gene values and training the network to obtain appropriate weight values), and by then applying predetermined data representing features derived from predetermined segments of the sample clip to the neural network to cause the network to detect the commercial content, if any, included in the sample clip information. In this manner, the audio and/or video information is evaluated for the presence of commercial content, using the neural network having an optimized architecture. The use of the neural network enables the network to detect commercial content in the audio and/or video information with a maximum, or at least high, degree of accuracy. Thereafter, the results of such an evaluation of the audio and/or video information may then be employed as desired (e.g., to delete or replace the commercial content from the signal, classify the content, etc.).

The optimized neural network and/or gene values identified in step 128 also may be provided to other devices, such as the user information appliance 4, for enabling the provided neural network and/or gene values to be employed in detecting predetermined content (e.g., commercials) in those devices. For example, instead of or in addition to employing the optimized neural network and/or chromosome gene values in the server 2, the neural network and/or values may be downloaded or otherwise provided to the user information appliance 4 for storage in the memory 18 of that appliance 4. Thereafter, the neural network and/or values may be retrieved by the controller 16 (and the gene values decoded into a neural network, if no neural network is provided) for use in evaluating a selected audio and/or video stream provided in the appliance 4 for the presence of commercial content, in a similar manner as described above in connection with the server 2. In other embodiments, software for decoding gene values into a neural network architecture, and software for obtaining data representing predetermined features derived from a given audio/video information stream sample, can be downloaded or be otherwise provided from the server 2 to user information appliances 4, in association with, or separately from, the optimized chromosome gene values, and those values can then be employed to define and construct a neural network having an architecture defined by the gene values, for use in detecting predetermined content in the information stream, at the information appliances 4. Software representing the overall method of Figs. 3a and 3b also may be downloaded or be otherwise provided from server 2 to information appliances 4, or may be pre-stored in those appliances 4, for enabling that method to be performed in those devices for determining optimum gene values, which can then be uploaded or be otherwise provided back to the server 2, if desired, or employed to generate a neural network architecture in the appliances 4. Moreover, although the above description is described in the context of there being a bidirectional link between the server 2 and information appliances 4, the invention is not limited merely that configuration. For example, the invention also may be employed in cases where there is no bidirectional link between the server 2 and information appliances 4, and all neural network training and testing may be performed at one place, and once an optimum neural network architecture is determined, that neural network may be implemented on hardware and placed in information appliances 4. If unidirectional or bidirectional communication is provided from the server 2 to information appliances 4, in a preferred embodiment a determined neural network architecture and weights thereof may be updated at predetermined times and downloaded to the appliances 4. Also, predetermined content (e.g., desired or undesired content) may be uploaded or otherwise provided from the individual appliances 4 to the server 2, along with a request for a determination and downloading of a new neural network architecture and weights which are suitable for detecting that content.

It also should be noted that, although the invention is described in the context of step 117 (and part of step 120) being performed to select chromosomes based on their fitnesses yielded as a function of Recall and Precision values, in other embodiments those selections may be made based on an evaluation of only Recall values or only Precision values yielded by chromosomes, or based on any other suitable measure of accuracy, and the measures may be of a scalar or vector type.

It also should be noted that, although the invention is described in the context of the neural networks being employed to identify the presence of commercials, and in the context of the neural networks operating in response to applied low-level, mid-level, or hi-level information derived from provided audio or video information, broadly construed, the invention is not so limited. It also is within the scope of this invention to employ one or more neural networks for detecting any type of predetermined content in analog or digital video signals or any other types of media information, and any type of data, such as, for example, raw, non-encoded data, or any type of low-level, mid-level, or hi-level (e. g., the presence of multiple black frames in succession) features that can be extracted, either in the compressed or uncompressed domain, may be evaluated by the neural networks, not only those described above. It should therefore be appreciated that the method of the present invention may be employed to optimize the detection of any type of desired or undesired content, included in any type of media information, and is not limited for use only in conjunction with detecting commercial content in audio or video information. One skilled in the relevant art would clearly appreciate in view of this description that any suitable type of data from a media signal can be employed in implementing the method of this invention, depending on the application of interest. Moreover, as used herein, the phrase "information stream" is not intended to limit the invention to on-line applications. Indeed, it is within the scope of this invention to evaluate any applicable type of media information, such as, for example, video information, audio information, combination video/audio information, etc., within any suitable type of environment, whether on-line or off-line, and an information stream may include one or more of types of such information, depending on the application of interest and predetermined operating criteria.

Moreover, in one embodiment of the invention, each chromosome may include multiple sets of genes, wherein each set can be used in defining a corresponding neural network. For example, in addition to the various gene values shown in Fig. 2, each chromosome Cr1-Crn (and offspring chromosome) may also include appropriate gene values for use in defining other applicable architectural characteristics of a neural network besides those described above, and each neural network may be trained and tested separately for each chromosome, using the appropriate gene values for that network. In one embodiment, a user may select (in initial step 100) which neural network architecture is desired to be employed, and then, as a result, all individual chromosome gene values besides those which are suitable for defining the selected architecture are initialized to '0', so that no results are obtained from the non-selected neural network architectures. In other embodiments, those gene values need not be set to '0', and each network may be constructed, trained, and tested separately for yielding separate results. Other genes may specify alternate ways to combine selected features into a final decision about content classification. Also, the chromosome values need not be represented in bit string form, and may instead be represented in any other suitable form. It should therefore be clear that, broadly construed, the present invention is not limited for use only in conjunction with chromosomes that include the types of gene described herein, or only with genes represented by bit strings.

It also should be noted that, although the invention is described in the context of the high performance chromosome gene values being determined by the server 2, broadly construed, the invention is not so limited. For example, as described above, it also is within the scope of this invention for the method depicted in Figs. 3a and 3b to be performed within other suitable devices, such as the user information appliance 4. In those embodiments, the method may be performed by evaluating one or more sample audio and/or video clips within such devices (e.g., appliance 4), in the above-described manner, and the sample clip(s) may be provided in the devices from any source, such as the server 2. Also, in other embodiments, the gene values employed within the server 2 may be provided to the server 2 from an external source, such as information appliances 4.

Although the foregoing description has been described in the context of the method of the invention being implemented using software instructions, in other embodiments hardware circuitry may be used in place of such instructions for implementing the method of the invention. By example only, although the invention is described in the context of neural networks being implemented by software, in other embodiments neural networks employed in this invention can be physical devices constructed from various filters and/or processors coupled to a CPU through a communication channel. The particular types of circuitry employed would be readily appreciated by those of ordinary skill in the art, in view of this description. Also, while the invention has been described in the context of employing the above-described genetic algorithm to evolve the chromosome values used in defining a neural network architecture, in other embodiments, other suitable types of genetic or other types of search algorithms may be employed instead, depending on the application of interest. A multitude of evolutionary algorithms are available that may be employed in accordance with this invention, and the particular choice of evolutionary algorithm for use in this invention is optional. It should therefore be understood that the invention is not limited for use only with the genetic algorithm described herein, and that the use of other types of evolutionary algorithms would be evident to one of ordinary skill in the art in the context of this disclosure. Neither is the invention limited for use only with the specific type of training procedure 260 and testing procedure described above. Indeed, it also is within the scope for this invention to employ other suitable types of techniques besides those described above for measuring output errors in steps 210 and 250, and such techniques may employ mapping and vector classifications into divided spaces or may be based on decision boundaries. Also, step 230 may be performed based on errors generated by individual segments, rather than based on the sum of squared errors generated for all segments of a sample clip, and/or the weight value adjustments in step 240 may employ any suitable type of weight adjustment algorithm besides the back-propagation algorithm referred to herein. The manner in which the controller 10 and/or 16 would need be programmed and the above-described method modified to enable such techniques to be performed, would be readily appreciated by one skilled in the art in view of this description.

It should further be noted that, although the invention is described in the context of the method selecting chromosomes based on their fitness in step 117 of Fig. 3a, in another embodiment of the invention, no such selection need be performed, and the selection of chromosomes only occurs in step 122 which is performed to select amongst a present group of parent and offspring chromosomes. As can be appreciated in view of this description, in that embodiment, step 118 is performed to mate chromosomes from the present population being evaluated.

As has been described in the foregoing description, the present invention provides a novel method, apparatus, and program for evolving gene values defining a neural network architecture until gene values are determined which define an architecture that enables predetermined content in media information to be detected with a substantially maximum or at least increased degree of accuracy relative to when other, intermediate gene values are employed. The method, apparatus, and program are advantageous in that they improve the accuracy of the content detection automatically, and therefore relieve users of the burden of having to manually select appropriate gene values. Moreover, by virtue of determining the optimum gene values automatically, the method of the invention can circumvent attempts made by commercial producers to prevent the successful detection of the commercials by modifying their broadcast commercials.

While the invention has been particularly shown and described with respect to preferred embodiments thereof, it will be understood by those skilled in the art that changes in form and details may be made therein without departing from the scope and spirit of the invention.

**Claims**

1. A method for operating at least one neural network (300), comprising the steps of:

   - applying data including an indication of predetermined content to an input of the at least one neural network (300), to cause the at least one network to generate at least one output indicative of either a detection or a non-detection of the predetermined content, wherein each neural network (300) has an architecture specified by at least one corresponding parameter; and
   - evolving the at least one parameter to modify the architecture of the at least one neural network (300), based on the at least one output, to increase an accuracy at which that at least one neural network (300) detects the predetermined content indicated by the data.

2. A method as set forth in claim 1, wherein the data represents at least one of an audio signal and a video signal, and the predetermined content includes desired or undesired content.

3. A method as set forth in claim 1, further comprising a step of deriving the data based on a provided electronic signal, prior to the step of applying.

4. A method as set forth in claim 3, wherein the data includes at least one of low-level data, mid-level data, and hi-level data derived from the electronic signal.

5. A method as set forth in claim 1, wherein the step of evolving includes performing a genetic algorithm to evolve the at least one parameter.

6. A method as set forth in claim 1, wherein the at least one parameter specifies at least one of a number of node layers (310, 320, 330) included in the at least one neural network (300) and a number of nodes $((N_L)_1$ to $(N_L)_{k2}$, $(N_2)_1$ to $(N_2)_{k2}$, $(N_1)_1)$ included in each node layer (310, 320, 330).

7. A method as set forth in claim 6, wherein the at least one parameter also specifies at least one of a learning rate (LR) for use with the at least one neural network (300) and at least one connection weight value (W1 to Wn) for the at least one neural network (300).

8. A method as set forth in claim 1, further comprising, prior to the step of applying:

   - training the at least one neural network (300) to detect the predetermined content by:

   - applying further data including an indiction of the predetermined content, to the input of the at least one neural network (300) to cause the at least one neural network (300) to generate at least one further output, and
   - varying at least one connection weight value (W1 to Wn) of the at least one neural network (300) based on the at least one further output.

9. A method as set forth in claim 1, wherein the step of evolving comprises the steps of:

   - determining the accuracy at which the at least one neural network (300) detects the predetermined content in the applying step, for each architecture of the at least one neural network (300);
   - selecting at least one parameter, each specifying a corresponding one of the architectures, based on a result of the step of determining the accuracy; and
   - producing at least one offspring parameter based on the at least one parameter selected in the step of selecting.

10. A method as set forth in claim 9, wherein the step of evolving further comprises the steps of:

   - applying further data including an indication of the predetermined content, to the input of the at least one neural network (300) while the at least one neural network (300) has an architecture specified by the at least one offspring parameter produced in the producing step, to cause the at least one network (300) to generate at least one further output indicative of either a detection or a non-detection of the predetermined content;
- determining the accuracy at which the at least one neural network (300) detects the predetermined content in that step of applying; and
- further selecting one or more of at least one parameter selected in the selecting step and at least one offspring parameter produced in the producing step, based on a result of that step of determining.

11. A method as set forth in claim 10, wherein the step of evolving further comprises the steps of:

- determining if there is a convergence of parameters remaining after the further selecting step; and
- if there is a convergence, storing a record of at least one of the parameters selected in the further selecting step.

12. A method as set forth in claim 9, wherein the step of producing comprises:

- pairing randomly-selected ones of parameters selected in the selecting step;
- determining if the parameters paired in the pairing step are incestuous; and
- for each of the paired parameters determined to be non-incestuous, swapping one or more values of the parameters with one another.

13. A method as set forth in claim 10, wherein the step of evolving further comprises the steps of:

- determining if there is a convergence of all parameters remaining after the further selecting step; and
- if there is no convergence, mutating at least one value of a most optimum one of all parameters remaining after the further selecting step, to produce plural mutated versions of the most optimum parameter; and
- applying even further data including an indication of the predetermined content, to the input of the at least one neural network (300) while the at least one neural network (300) has an architecture specified by the most optimum parameter or one of the mutated versions of the most optimum parameter.

14. A method as set forth in claim 1, further comprising the step of forwarding at least one of an evolved parameter resulting from the step of evolving and information representing the architecture as modified in the step of evolving, towards a predetermined destination.

15. A method for detecting predetermined content represented in a provided electronic signal representing at least one of video and audio information, the method comprising the steps of:

- applying data derived from the signal to inputs of respective ones of separate neural networks (300) to cause the neural networks (300) to generate corresponding outputs indicative of either a detection or a non-detection of the predetermined content, wherein each neural network (300) has a corresponding architecture;
- determining an accuracy at which individual ones of the neural networks (300) detect the predetermined content, based on the outputs generated in the step of applying; and
- based on the step of determining, modifying the architecture of at least one of the neural networks (300), to substantially maximize the accuracy at which that least one neural network (300) detects the predetermined content represented in the signal from which the data is derived.

16. A method as set forth in claim 15, further comprising the step of encoding the electronic signal to derive the data applied in the step of applying.

17. An apparatus (2; 4) for detecting predetermined content represented in a provided electronic signal, the apparatus comprising:

- a feature deriver (10; 16; 19; 33), arranged for deriving predetermined feature data indicative of the predetermined content from the provided electronic signal; and
- a controller (10; 16), operating under the control of a stored program, for (a) applying the predetermined feature data derived by the feature deriver (10; 16; 19; 33) to at least one input of at least one neural network to cause the at least one neural network (300) to generate at least one output indicative of either a detection or a non-detection of the predetermined content, wherein each neural network (300) has an architecture specified by at least one corresponding parameter, and (b) evolving the at least one parameter to modify the architecture of the at least one neural network (300), based on the at least one output, to increase an accuracy at which that at least one neural network (300) detects the predetermined content indicated by the predetermined feature data.

18. An apparatus (2; 4) as set forth in claim 17, wherein the predetermined content includes desired or undesired content.

19. An apparatus (2; 4) as set forth in claim 17, wherein the controller (10; 16) operates under the control of the program to evolve the at least one parameter by performing a genetic algorithm.

20. An apparatus (2; 4) as set forth in claim 17, wherein the controller (10; 16) also operates under the control of the program to, prior to the applying, train the at least one neural network (300) to detect the predetermined content by (i) applying at least some of the predetermined feature data derived by the feature deriver (10; 16; 19; 33) to the at least one input of the at least one neural network (300) to cause the at least one neural network (300) to generate at least one further output, and (ii) varying at least one connection weight value (W1 to Wn) of the at least one neural network (300) based on the at least one further output.

21. An apparatus (2; 4) as set forth in claim 17, wherein the controller (10; 16) operates under the control of the program to perform the evolving by:

  - determining the accuracy at which the at least one neural network (300) detects the predetermined content indicated by the predetermined feature data, for each architecture of the at least one neural network (300),
  - selecting one or more of the at least one parameter, each specifying a corresponding one of the architectures, based on a result of the determining, and
  - producing at least one offspring parameter based on the one or more at least one parameter selected in the selecting.

22. An apparatus (2; 4) as set forth in claim 21, wherein the feature deriver (10; 16; 19; 33) also is arranged to derive further predetermined feature data indicative of the predetermined content, from a further electronic signal, and the controller (10; 16) also operates under the control of the program to perform the evolving by:

  - applying the further predetermined feature data to the at least one input of the at least one neural network (300) while the at least one neural network (300) has an architecture specified by the at least one offspring parameter produced in the producing, to cause the at least one neural network (300) to generate at least one further output indicative of either a detection or a non-detection of the predetermined content,
  - determining the accuracy at which the at least one neural network (300) detects the predetermined content indicated by the further predetermined feature data, and
  - further selecting at least one of the one or more at least one parameter selected in the selecting and the at least one offspring parameter produced in the producing, based on a result of that step of determining.

23. An apparatus (2; 4) as set forth in claim 22, wherein the controller (10; 16) also operates under the control of the program to further perform the evolving by:

  - determining if there is a convergence of all parameters remaining after the further selecting, and
  - if there is a convergence, storing a record of at least parameter selected in the further selecting.

24. An apparatus (2; 4) as set forth in claim 17, and further comprising an interface (8; 14) coupled to the controller, wherein the controller (10; 16) is operable for forwarding at least one of an evolved parameter resulting from the evolving and information representing the architecture as modified in the evolving, through the interface (8; 14) towards at least one external destination (4; 2) coupled to that interface (8; 14).

25. An apparatus (2; 4) as set forth in claim 24, wherein the apparatus (2; 4) includes a server (2), and the external destination (4; 2) includes an information appliance (4).

26. An apparatus (2; 4) for detecting predetermined content indicated in data representative of a provided electronic signal, the apparatus (2; 4) comprising:

  - neural network means (300), responsive to the data being applied to an input thereof, for generating at least one output indicative of either a detection or a non-detection of the predetermined content, wherein an architecture of the neural network means (300) is specified by at least one corresponding parameter; and

- means for evolving the at least one parameter to modify the architecture of the neural network means (300), based on the at least one output, to increase an accuracy at which the neural network means (300) detects the predetermined content indicated by the data.

**27.** An apparatus (2; 4) for detecting predetermined content indicated in predetermined feature data derived from a provided electronic signal, the apparatus comprising:

- plural neural networks (300), each being responsive to the predetermined feature data being applied to an input thereof, for generating a corresponding output indicative of either a detection or a non-detection of the predetermined content, wherein each neural network (300) has a corresponding architecture;
- means for determining an accuracy at which each neural network (300) detects the predetermined content, based on the output generated by that neural network (300); and
- means for modifying the architecture of at least one of the neural networks (300), to substantially maximize the accuracy at which that least one neural network detects the predetermined content indicated by the predetermined feature data, based on a determination made by said means for determining.

**28.** A program product comprising computer readable-code which, when executed, performs a method for operating at least one neural network (300), the method comprising the steps of:

- applying data including a representation of predetermined content, to an input of at least one neural network (300), to cause the at least one neural network (300) to generate at least one output indicative of either a detection or a non-detection of the predetermined content, wherein each neural network (300) has an architecture specified by at least one corresponding parameter; and
- evolving the at least one parameter to modify the architecture of the at least one neural network (300), based on the at least one output, to increase an accuracy at which that at least one neural network (300) detects the predetermined content.

**29.** A storage medium (15; 18) storing a program having computer readable-code which, when executed, performs a method for operating at least one neural network (300), the method comprising the steps of:

- applying data including a representation of predetermined content, to an input of at least one neural network (300), to cause the at least one neural network (300) to generate at least one output indicative of either a detection or a non-detection of the predetermined content, wherein each neural network (300) has an architecture specified by at least one corresponding parameter; and
- evolving the at least one parameter to modify the architecture of the at least one neural network (300), based on the at least one output, to increase an accuracy at which that at least one neural network (300) detects the predetermined content.

**30.** A system (1) for exchanging information, comprising:

- at least one first information apparatus (2; 4); and
- at least one second information apparatus (4; 2), comprising:

- an interface (14; 8), coupled to said first information apparatus (2; 4) through an external communication interface (6),
- a feature deriver (16; 33; 10; 19), arranged for deriving predetermined feature data indicative of predetermined content, based on a provided electronic signal that includes a representation of the predetermined content, and
- a controller (16; 10), operating under the control of a stored program, for (a) applying the predetermined feature data derived by the feature deriver (16; 33; 10; 19) to an input of at least one neural network (300) to cause the at least one neural network (300) to generate at least one output indicative of either a detection or a non-detection of the predetermined content, wherein each neural network (300) has an architecture specified by at least one corresponding parameter, (b) evolving the at least one parameter to modify the architecture of the at least one neural network (300), based on the at least one output, to increase an accuracy at which that at least one neural network (300) detects the predetermined content indicated by the predetermined feature data, and (c) forwarding information representing at least one of an evolved parameter resulting from the evolving and the architecture as modified by the evolving, to the at least one first information apparatus through the interface (14; 8) and the external communication interface (6).

**31.** A system (1) as set forth in claim 30, wherein the first information apparatus (2; 4) is an information appliance (4), and the second information apparatus (4; 2) is a server (2).

**32.** A system (1) as set forth in claim 30, wherein the first information apparatus (2; 4) is a server (2), and the second information apparatus (4; 2) is an information appliance (4).

**33.** A system (1) as set forth in claim 32, wherein the first information apparatus (2; 4) comprises:

- a further interface (8; 14), coupled to said interface (14; 8) of said second information apparatus (4; 2) through the external communication interface (6); and
- a further controller (10; 16) coupled to said further interface (8;14), said further controller (10; 16) being responsive to said further interface (8; 14) receiving the information from said second information apparatus (4; 2) for at least one of storing the information in an associated memory (15; 18) and applying further data indicative of the predetermined content, derived from a further signal including a representation of the predetermined content, to a further neural network (300) having an architecture specified in accordance with the information, to cause the further neural network (300) to detect the predetermined content.

**34.** A system (1) as set forth in claim 33, wherein the first information apparatus (2; 4) is an information appliance (4), and the second information apparatus (4; 2) is a server (2).

**35.** A system (1) as set forth in claim 30, wherein the first information apparatus (2; 4) is operable for providing the electronic signal to said at least one second information apparatus (4; 2) through said interface (14; 8) and said external communication interface (6), for application of the electronic signal to the feature deriver (16; 33; 10; 19), and wherein said feature deriver (16; 33; 10; 19) derives the predetermined feature data from the electronic signal in response to that application.

FIG. 1

| Cr# | (IL) NUMBER OF INPUT LAYER NEURONS | (LR) LEARNING RATES | NUMBER OF HIDDEN LAYERS (HL) | NUMBER OF NEURONS IN HIDDEN LAYER(S) (NL) | NUMBER OF OUTPUT LAYER NEURONS (OL) | WEIGHT VALUES |
|---|---|---|---|---|---|---|
| Cr1 | IL1 | LR1 | HL1 | NL1 | OL1 | WV1 |
| Cr2 | IL2 | LR2 | HL2 | NL2 | OL2 | WV2 |
| Cr3 | IL3 | LR3 | HL3 | NL3 | OL3 | WV3 |
| ⋮ | | | | | | |
| Crn | ILn | LRn | HLn | NLn | OLn | WVn |

FIG. 2

EP 1 383 079 A2

START — 100

ENTER COMMAND
P(t = 0) — 110

TRAIN AND TEST
NEURAL NETWORK — 112

SELECT
CHROMOSOMES — 117

PRODUCE K(t) : RANDOMLY
MATE CHROMOSOMES — 118

EVALUATE EACH MEMBER
OF K(t) : TRAIN AND TEST — 120

P(t = t+1) = BEST OF P(t) + K(t) — 122

CONVERGED? — 124
N
Y

DONE? — 126
N
Y

130
SOFT
RESTART

END — 128

FIG. 3A

FROM STEP 110 OF FIG. 3B

DECODE THE GENES INTO
A NEURAL NETWORK — 200

ADJUST THE INTERNAL WEIGHTS
OF THE NETWORK RESPONSIVE
TO THE ERRORS — 240

EXPOSE THE NEURAL NETWORK
TO TRAINING INSTANCES AND
MEASURE THE OUTPUT ERRORS — 210

260

NO

IS
ERROR LESS
THAN CRITERION

NO

IS
TRAINING TIME
EXHAUSTED — 220

YES

YES

EXPOSE THE NETWORK
TO TEST INSTANCES AND
MEASURE OUTPUT ERROR — 250

SEGMENTS CORRECTLY
IDENTIFIED? — 251

UPDATE # CORR. IDENTIFIED
FOR EACH CHROMOSOME — 252

CALCULATE RECALL AND
PRECISION FOR EACH CHROMOSOME — 253

250'

DETERMINE FITNESS (F)
OF PRESENT CHROMOSOME — 254

TO STEP 117 OF FIG. 3A

# FIG. 3B

Cr1     (7,0,4)       1 1 1 0 0 0 1 0 0

Crn     (1,6,2)       0 0 1 1 1 0 0 1 0

CROSSOVER POINT[1]

# FIG. 4A

Crk1     (7,2,2)       1 1 1 0 1 0 0 1 0

Crk2     (1,4,4)       0 0 1 1 0 0 1 0 0

# FIG. 4B

Cr1     (7,0,4)       1 1 1 0 0 0 1 0 0

Crk1                0 1 1 0 0 0 1 0 0

# FIG. 4C

FIG. 5